# EUROPÄISCHE PATENTSCHRIFT

(11) **EP 2 422 612 B1**
(45) Veröffentlichungstag und Bekanntmachung des Hinweises auf die Patenterteilung: **04.03.2015**
(21) Anmeldenummer: 11169319.8
(22) Anmeldetag: 09.06.2011
(51) Int. Cl.: A01G 7/04

(54) **Verfahren zur Pflanzenbehandlung**
Plant treatment method
Procédé de traitement de plantes

(30) Priorität: 27.08.2010 DE 102010035678
(43) Veröffentlichungstag der Anmeldung: 29.02.2012
(73) Patentinhaber: Simply Water GmbH, 93055 Regensburg (DE)
(72) Erfinder: Philipps, André, 93059 Regensburg (DE)
(74) Vertreter: Stolmár, Matthias

(56) Entgegenhaltungen:
- EP-A1- 2 281 457
- WO-A2-00/13482
- WO-A2-2008/101364
- JP-A- 6 279 217
- JP-A- 2002 335 764

## Beschreibung

Die vorliegende Erfindung betrifft ein Verfahren zur Pflanzenbehandlung und insbesondere ein Verfahren zum Verstärken des Wachstums der Pflanzen, das die Aufbringung eines Trägermediums mit elektrostatischer Ladung auf eine Pflanze und/oder einen Pflanzensamen unter Bedingungen, die zur Verstärkung des Wachstums der Pflanze oder von aus den Pflanzensamen gewachsenen Pflanzen geeignet sind, umfasst.

Mittel und Verfahren zur Steigerung des Wachstums bei Pflanzen sind im Stand der Technik bekannt. So werden in konventioneller Weise anorganische oder organische Düngemittel eingesetzt, um das Wachstum der Pflanzen zu verbessern. Nachteilig hierbei ist, dass Düngemittel in trockneren und heisseren Regionen bzw. Jahreszeiten eine geringere Effektivität aufweisen. Wünschenswert für wärmere Regionen ist ein Verfahren zur Verstärkung des Wachstums bei Pflanzen. Dies kann sowohl die Wurzel als auch die oberirdischen Teile der Pflanze betreffen. Pflanzen mit einem verstärkten Wurzelwachstum weisen eine bessere Nährstoffaufnahme aus dem Boden auf und sind besser geeignet, Trockenheits- bzw. Dürreperioden zu überstehen.

Die DE 10 2008 049 742 A1 beschreibt in diesem Zusammenhang die Verwendung von Superabsorbern zur Förderung des Wurzelwachstums von Pflanzen. Dieser Superabsorber wird bevorzugt durch Polymerisation einer Monomerlösung, die als geeignete Monomere beispielsweise Acrylsäure, Methacrylsäure, Maleinsäure, Fumarsäure und Itaconsäure, oder deren Derivate umfasst, hergestellt und angewendet. Die WO 00/13482 beschreibt gereinigte Bohen sowie deren kultivierung mit elektrolysiertem Wasser. WO 2008/101364 betrifft ein Pflanzenschutz - Verfahren mit in salzhaltigem Wasser elektrolytisch erzeugten oxidativen Radikalen und UV-C-Licht und die in eine motorisierte Rücken oder Handspritze, oder andere Spritzentypen integrierte Technik zur Durchführung des Verfahrens. EP 2 281 457 A1 betrifft ein Verfahren zur physikalischen Pflanzen-Behandlung mittels elektrostatischer Ladung. Nachteilig an diesen Verfahren bzw. diesen Substanzen zur Pflanzenbehandlung ist, dass sie die Umwelt nachteilig beeinflussen können. Ein weiterer Nachteil besteht darin, dass diese Mittel sehr kostenaufwendig sind. Hiervon ausgehend ist es Aufgabe der vorliegenden Erfindung, ein Verfahren zur Verstärkung des Wachstums bei Pflanzen bereitzustellen, das die beschriebenen Nachteile überwindet.

Gelöst wird diese Aufgabe mit einem Verfahren nach Anspruch 1 und einem Mittel nach Anspruch 11. Bevorzugte Ausführungsformen der Erfindung sind Gegenstand der abhängigen Ansprüche.

Die vorliegende Erfindung löst die gestellte Aufgabe dadurch, dass das eingesetzte Trägermedium mittels eines InfluenzverfahrensElektrolyseverfahrens erhältlich ist, bei dem eine Mischung von positiv und negativ geladenem Trägermedium beaufschlagt wird, oder in der Abfolge zunächst positiv geladenes Trägermedium, danach negativ geladenes Trägermedium und umgekehrt.

Dadurch wird eine erhebliche Verbesserung der Pflanzenbehandlung erreicht. Das erfindungsgemässe Verfahren bewirkt eine Verbesserung des Pflanzenwachstums, ist aber zugleich für die Umwelt unbedenklich. Das Verfahren zeigt keinerlei toxische Auswirkungen auf die Umgebung, Tiere und Pflanzen oder auf die Verbraucher. Das eingesetzte Trägermedium weist oxidativ wirkende Verunreinigungen in einem so geringen Anteil auf, dass die Wirkung auf einem anderen Effekt beruhen muss. Es kann davon ausgegangen werden, dass die Wirkung des wie oben beschriebenen behandelten Wassers auf der Anregung des Wassermoleküls selbst beruht. Die Wassermoleküle befinden sich in einem Clusterverband, der sich aufgrund der elektrostatischen Dipolstruktur des Wassermoleküls ausbildet. Durch das Elektrolyseverfahren werden Wassermoleküle elektrisch entladen und die erzeugten Ladungsträger im Clusterverband durch ständigen Austausch stabilisiert. Das derart elektrisch entladene Wasser kann daher desinfizierend wirken, da es imstande ist, Zellstrukturen zu denaturieren bzw. die Elektronentransportmechanismen von Mikroorganismen zu stören.

Dies ist einer der Gründe für die fehlende Resistenzbildung von Mikroorganismen oder Pilzen. Es wird angenommen, dass der zu beobachtende Effekt auf das Wurzelwachstum unter anderem auch darauf zurückzuführen ist, dass Mikroorganismen, die das Wurzelwachstum hemmen, durch das erfindungsgemässe Verfahren reduziert werden.

Darüber hinaus wird aber auch davon ausgegangen, dass durch die erfindungsgemässe Behandlung die Aufnahme von Wasser, Mineralien und weiteren Stoffen aus dem Boden in den Wurzelraum verbessert wird. Die Umwandlung der im Saatgut eingelagerten Stärke in Zucker wird angeregt sodass die Entwicklung der Pflanze verbessert wird.

Es hat sich als besonders vorteilhaft erwiesen, wenn das Medium mittels Influenzverfahren gewonnen wird.

Das Influenzverfahren umfasst die folgenden Schritte: Einbringen des zu behandelnden Wassers in eine elektrisch beaufschlagte Zelle, Ausrichtung der Ladungen und freien Elektronen im elektrischen Feld, Trennung der Ladungen durch Bewegung und der daraus resultierender Influenz und Sammlung und Abführung der deelektronisierten, positiv und/oder negativ geladenen Fraktion. Durch dieses Verfahren wird ein Wasser gewonnen, welches einen Elektronenmangel aufweist. Dies hat einen hohen Bedarf, die ungeladenen Positionen in den Clustern mit Elektronen zu füllen. Im Kontakt mit e-lektronenreichen Oberflächen gibt es einen elektrischen Schlag, der zum Ladungsausgleich führt.

Es konnte gezeigt werden, dass die Behandlung mit positiv und im Nachgang negativ geladenem Wasser die stärkste Steigerung des Pflanzenwuchses bewirkte. Es können aber je nach Beschaffenheit des Bodens als auch nach Art der zu behandelnden Pflanze positiv oder negativ geladene Trägermedien alleine oder auch in Mischungen eingesetzt werden.

In einer weiteren bevorzugten Ausführungsform weist das Trägermedium eine Gesamtkonzentration an oxidativen Substanzen von weniger als 180 ppm auf.

Als besonders vorteilhaft hat es sich erwiesen, wenn das positiv geladene Trägermedium eine Gesamtkonzentration an entstandenen Oxidantien von weniger als 380, bevorzugt weniger als 100, besonders bevorzugt weniger als 50 und insbesondere bevorzugt weniger als 20 ppm aufweist, und das negativ geladene Trägermedium ein Konzentration an Natriumhydroxid zwischen 5 und 500 ppm, einen pH-Wert zwischen 9 und 12 und ein Elektronenübertragungspotential von - 800 +/- 300 mV aufweist.

Besonders bevorzugt ist die Anwendung des Verfahrens, indem das Trägermedium auf eine geringere elektrostatische Ladung transformiert wird. Dabei wird als Leiter der elektrostatischen Ladung Wasser genutzt, sodass weniger als 100 ppm, besonders bevorzugt weniger als 50 ppm und in besonders bevorzugter Weise weniger als 30 ppm an Verunreinigungen auftritt.

Ein solch niedriger Gehalt an chlorhaltigen Oxidantien bzw. Peroxyden oder Ozon ermöglicht es, unerwünschte Nebenwirkungen auf die Pflanzen bzw. die Umgebung zu minimieren. Die vorteilhafte Wirkung auf das Pflanzenwachstum wird durch die Reduktion der Oxidantien nicht beeinträchtigt. Dies zeigt, dass der Effekt des Trägermediums nicht auf beim Influenzverfahren entstandenen Oxidanten beruht, sondern auf der veränderten Struktur des Wassers.

Von Vorteil ist es dabei, wenn das Trägermedium mittels Sprühen und/oder Überziehen und/oder Bestäuben und/oder Eintauchen erfolgt. Dies kann dadurch erfolgen, dass ein Pflanzensamen vor Einsetzen im Erdreich behandelt wird, es kann aber auch dadurch erfolgen, dass ein Keimling behandelt wird, wobei der Wurzelbereich und/oder der überirdische Bereich behandelt werden.

Vorteilhaft ist es weiterhin, wenn das Verfahren bzw. das Trägermedium eine fungizide und/oder bakterizide und/oder viruzider und/oder sporozide Wirkung aufweist. Durch Bekämpfung von Keimen, die das Wurzelwachstum hemmen, wird eine weitere Verbesserung des Pflanzenwachstums erreicht. Aber auch dadurch, dass Keime, die die oberirdischen Teile schädigen, bekämpft werden, kann das Pflanzenwachstum verbessert werden.

Ferner ist es von Vorteil, wenn das Trägermedium zusätzliche Additive enthält. Diese können ausgewählt sein aus der Gruppe der Kunstdünger, Insektizide, Fungizide, Nematizide und Gemische derselben.

Von besonderem Vorteil ist es, wenn das Verfahren eine größere Pflanzhöhe und/oder größere Ausbeute und/oder stärkeres Wurzelwachstum und/oder frühere Reifung und/oder verbesserte Resistenz gegen Trockenheit bewirkt.

Von besonderem Vorteil ist es dabei, wenn das Verfahren eine frühere Keimung und/oder frühere Frucht- und Pflanzenfärbung bewirkt.

Es hat sich als besonders vorteilhaft erwiesen, wenn während der Behandlung Pflanzensamen behandelt werden, um die Pflanzensamenmengen, die keimen, zu erhöhen, wobei das Verfahren ferner das Setzen der mit dem Trägermedium behandelten Samen in natürliche oder künstliche Erde und das Züchten von Pflanzen aus den in die Erde gesetzten Samen umfasst.

Von ganz besonderem Vorteil ist es, wenn das Verfahren an Pflanzen zur Lebensmittelgewinnung, wie beispielsweise Getreide, Obst, Gemüse eingesetzt wird. Es ist aber auch einsetzbar bei Zierpflanzen, um den Wuchs- bzw. Blütenerfolg zu steigern. Diese Pflanzen können bevorzugt ausgewählt sein aus der Gruppe von Reis, Weizen, Hafer, Roggen, Einkorn, Dinkel, Hartweizen, Karmut, Gerste, Hirse, Sorghum, Teff, Hopfen, Baumwolle, Sonnenblumen, Erdnuss, Mais, Kartoffel, Süßkartoffel, Bohne, Erbse, Chicoree, Kopfsalat, Endiviensalat, Kohl, Blumenkohl, Brokkoli, Kohlrübe, Rettich, Spinat, Zwiebel, Knoblauch, Aubergine, Paprika, Sellerie, Karotte, Turbankürbis, Kürbis, Zucchini, Gurke, Apfel, Birne, Melone, Erdbeere, Weintraube, Himbeere, Ananas, Banane, Kaffee, Sojabohne, Tabak, Tomate, Sorghum, Zuckerrohr, Rose, Saintpaulia, Petunie, Pelargonie, Poinsettia, Chrysantheme, Gartennelke, Kakao und Zinnie.

Eine gezielte Steigerung der Wurzelmasse von Pflanzen wird auch als rootboosting bezeichnet. Somit umfasst das rootboosting eine Saat- und Pflanzengutbehandlung und beinhaltet ebenso das seedpriming, also das Behandeln der Samen vor dem Einsetzen in die Erde. Mit dem rootboosting kann das Wurzelwachstum um bis zu 100% und mehr gesteigert werden. Dies bedeutet bei Trockenheit eine Verminderung von Ertragsausfällen. Die Jugendentwicklung von Pflanzen kann durch das rootboosting beschleunigt werden. Unter Trockenbedingungen kann durch das rootboosting die vorzeitige Abreife des Getreides (Notreife) reduziert bzw. verhindert erden. Schließlich bleibt die photosynthetische aktive Blattmasse länger gesund und es kann voraussichtlich mehr Ertrag gebildet werden.

Eine weitere Anwendung der Erfindung besteht in der Behandlung von Pflanzenerkrankungen wie beispielsweise bei Braunrostbefall oder Reisbrandpilz bzw. einer präventiven Behandlung zur Verhinderung eines solchen Befalls. Bei beiden Erkrankungen führt eine Behandlung mit positivem Influenzwasser (IW+) zu einer signifikanten Verhinderung der Erkrankung bzw. zu einer Verringerung der Schäden.

Braunrostbefall wird bei Weizen beispielsweise durch Bakterien der Art *Puccinia triticina* hervorgerufen und verursacht erhebliche Ernteschäden. So verringerte ein Braunrostbefall im Jahr 1007 die Weizenernte in den USA um 14%. Die Ernteschäden werden dabei nicht durch eine Zerstörung der Pflanze hervorgerufen, sondern durch eine verminderte Kornzahl je Ähre bzw. einem geringeren Korngewicht.

Reisbrandpilz, hervorgerufen durch *Magnaporthe grisea,* zählt zu einer der global wirtschaftlich bedeutendsten Pflanzenkrankheiten.

Das Verfahren eignet sich auch zum sogenannten base priming. Dabei werden Samen und/oder Setzlinge und/oder junge Pflanzen mit einem Trägermedium behandelt, das mittels eines Influenzverfahrens gewonnen wird. Base priming bewirkt eine Beschleunigung des Pflanzenwachstums und/oder eine Verhinderung bzw. Reduzierung von Pflanzenerkrankungen wie beispielsweise der "Gelben Welke" am Salat.

Base priming bewirkt eine wirkungsvolle Bekämpfung von Krankheitserregern beispielsweise an Basilikum und/oder Petersilie und/oder Salat. Die Behandlung von Kräuterkulturen erfolgt bevorzugt im Gewächshaus.

Darüber hinaus kann base priming auch mit positiv und negativ geladenem Trägermedium, das mittels eines Influenzverfahrens gewonnen wird, behandelt werden. Dadurch kann eine Verbesserung des Wurzelwachstums und eine Beschleunigung des Sprossenwachstums erreicht werden. Durch das beschleunigte Wachstum wird in Weizen beispielsweise die Anfälligkeit gegenüber *Septoria tritici* (Blattdürre) vermindert.

Eine Schwierigkeit bei der Bekämpfung von Septoria tritici mit Trägermedium, das mittels eines Influenzverfahrens gewonnen wird, liegt an der langen Latenzzeit dieses Erregers. Die ersten Symptome werden erst 3-4 Wochen nach der Infektion sichtbar (Latenzzeit). Moderne Fungizide mit guter Kurativleistung erfassen den noch nicht sichtbaren Befall bis zu 10-14 Tagen nach der Infektion. Um den Bekämpfungstermin besser abschätzen zu können, gibt es einige Prognosesysteme (z.B. Septoria-Timer), deren Vorhersage auf der Ermittlung der für eine Infektion günstigen Witterungsbedingungen basiert. Weist nach entsprechenden Witterungsbedingungen jede 2. Pflanze Symptome auf, muss behandelt werden (50% Befallshäufigkeit).

Dabei bewirkt base priming, dass sich behandelte Pflanzen unter ungünstigen Umweltbedingungen eher in Richtung Optimum entwickeln können als unbehandelte Pflanzen. Weiter führt die Behandlung zu einer verbesserten Toleranz gegenüber Trockenstress und/oder dazu, dass das genetische Potential einer Sorte besser ausgeschöpft werden kann. Dies bewirkt erhebliche Qualitäts- und Ertragssteigerungen beispielsweise in Sommerweizen.

Weitere Einzelheiten und Merkmale der Erfindung ergeben sich aus den Abbildungen, in denen die vorliegende Erfindung veranschaulicht wurde. Diese Zeichnungen zeigen:
- Figur 1: ein Diagramm, welches die EC-Stadien der Pflanzenentwicklung zeigt;
- Figur 2: ein Diagramm, welches die Vergrößerung der Wurzelmasse an Sommerweizen zeigt;
- Figur 3: ein Foto zur Veranschaulichung der Wirkung auf die Wurzelmasse;
- Figur 4: ein Foto zweier Versuchspflanzen nach Behandlung gemäß einer Ausführungsform der vorliegenden Erfindung sowie Kontrollversuchen;
- Figur 5: eine Darstellung der Verhinderung der vorzeitigen Abreife;
- Figur 6: ein Foto, das die Wirkung der vorliegenden Erfindung auf die Abreife von Blättern veranschaulicht;
- Figur 7: eine Darstellung der Ergebnisse von Feldversuchen an Gemüse, das mit Bakterien des Stammes *Erwinia carotovora* befallen war;
- Figur 8: eine Darstellung des Einflusses eines Trägermediums, das mittels eines Influenzverfahrens gewonnen wurde, auf Braunrostbefall bei Gerste;
- Figur 9: den Einfluss eines Trägermediums, das mittels eines Influenzverfahrens gewonnen wurde, auf das Wurzelwachstum von Getreide;
- Figur: 10 den Einfluss eines Trägermediums, das mittels eines Influenzverfahrens gewonnen wurde, auf die Keimung und Entwicklung von Getreide;
- Figur 11: den Einfluss eines Trägermediums, das mittels eines Influenzverfahrens gewonnen wurde, auf die Ertragssteigerung bei Getreide;
- Figur 12: den Einfluss eines Trägermediums, das mittels eines Influenzverfahrens gewonnen wurde, auf die Qualität von Getreidemehl;
- Figur 13: den Einfluss eines Trägermediums, das mittels eines Influenzverfahrens gewonnen wurde, auf Biomasse und Kolbenzahl bei Mais;
- Figur 14: den Einfluss eines Trägermediums, das mittels eines Influenzverfahrens gewonnen wurde, auf die Biomasse von Mais bei Trockenstress;
- Figur 15: den Einfluss eines Trägermediums, das mittels eines Influenzverfahrens gewonnen wurde, auf das Längenwachstum von Mais; sowie
- Figur 16: den Einfluss eines Trägermediums, das mittels eines Influenzverfahrens gewonnen wurde, auf den Mineraliengehalt von Mais.

Bei den Versuchen bezeichnet "Normal" Aufzuchtbedingungen, die den gewöhnlichen Bedingungen ohne Priming entsprechen. Mit "Wasser" werden die Versuche bezeichnet, bei denen gewöhnliches Trinkwasser eingesetzt wurde. Bei diesen Versuchen wurden die Pflanzen mit einer optimalen Wassermenge behandelt. Bei Einsatz der negativ bzw. positiv geladenen Trägermedien bzw. die Beaufschlagung in der Abfolge (+/-) wurden diese eingesetzt.

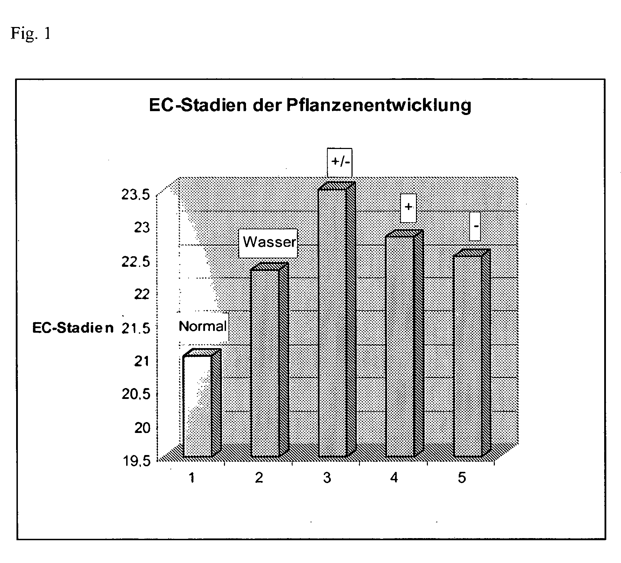

Figur 1 zeigt die Beschleunigung der Frühentwicklung in EC-Stadien der Pflanzenentwicklung. Dabei geben die EC-Stadien die Entwicklung von Pflanzen wieder. EC20 steht für die Phase der Bestockung. EC21 bedeutet, dass der erste Bestockungsbetrieb gebildet wurde. EC22 bedeutet, dass der zweite und EC23, dass der dritte Bestockungstrieb gebildet wurde. Die Pflanzen wurden in der Bestockungsphase untersucht. Das Pflanzenwachstum der Kontrollgruppe "normal" war in der Phase EC21. Das Diagramm zeigt, dass die Pflanzen, die mit positiv und negativ geladenem Trägermedium behandelt worden waren, zu diesem Zeitpunkt (EC21) eine Größe aufwiesen, die etwa der in EC23 entsprach. Der hier veranschaulichte Effekt ist insbesondere in Gewächshauskulturen von hohem wirtschaftlichem Nutzen. Bei diesem Diagramm fällt auf, dass die Anwendung von positiv geladenem Wasser mit anschließender Behandlung mit negativ geladenem Wasser erheblich bessere Ergebnisse zeigt als die Verwendung von positiv oder negativ geladenen Wassers allein.

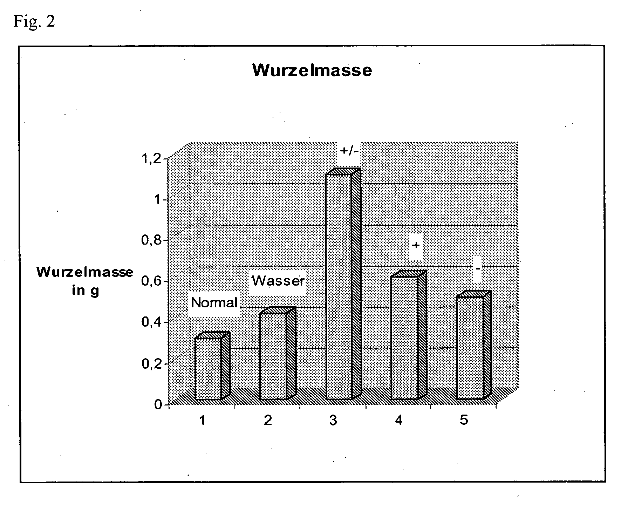

Figur 2 veranschaulicht in einem Diagramm die Verbesserung des Wurzelwachstums durch Behandlung mit dem Trägermedium, die gemäß der Erfindung durch Influenz gewonnen wurde. Dieses Diagram zeigt, dass die Behandlung der + Komponente mit anschließender Behandlung der - Komponente erheblich bessere Effekte zeigt als beispielsweise die alleinige Behandlung mit positiv oder negativ geladenem Trägermedium. Diese Behandlungen bewirkte eine Wurzelmasse, die nahezu das 5-fache des Normalversuchs und nahezu der 2,5-fache des Wasserversuchs betrug.

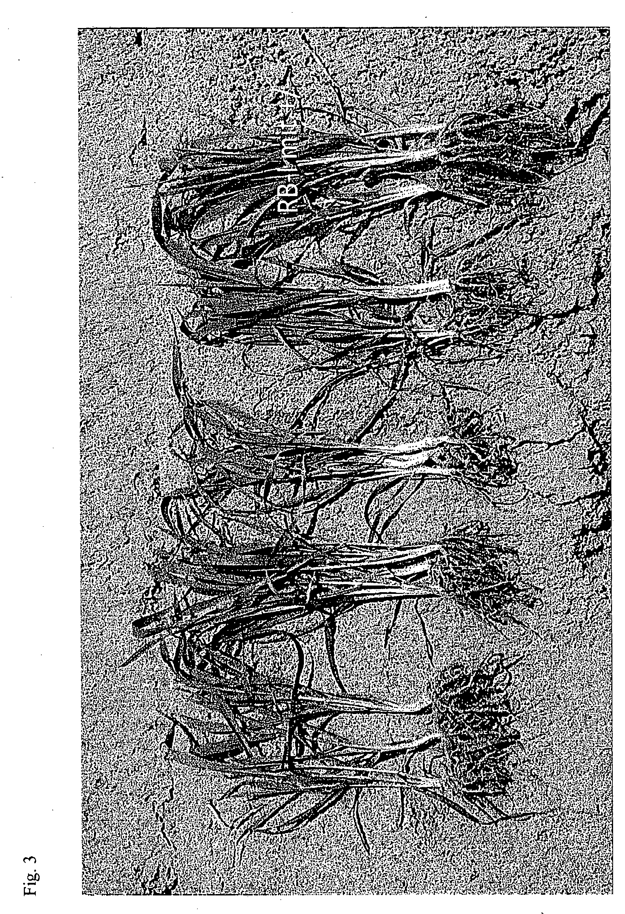

Figur 3 zeigt in einer fotografischen Darstellung den Effekt einer Behandlung mit einem Trägermedium gemäß der Erfindung. Jeweils drei Pflanzen wurden zu einer Probegruppe gruppiert. Die Probegruppen 1 bis 4 stellen unbehandelte Pflanzen dar, wohingegen die Probegruppe 5 Pflanzen darstellt, welche mit dem Trägermedium gemäß der Erfindung behandelt wurden. Deutlich erkennbar sind die Unterschiede des Wurzelwachstums. Die Probegruppe 5 zeigt ein Wurzelvolumen, das nahezu doppelt so groß ist wie das Wurzelvolumen der Kontrollgruppen 1 bis 4.

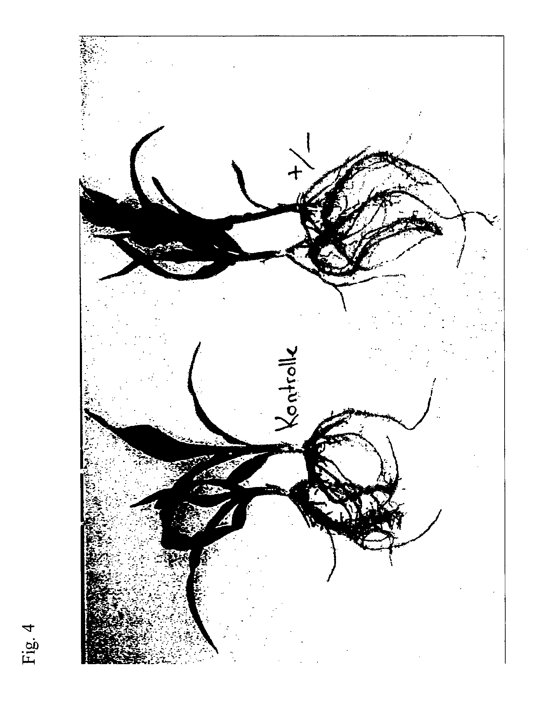

Figur 4 zeigt zur besseren Veranschaulichung jeweils zwei Pflanzen aus der Kontrollgruppe und zwei Pflanzen aus den mit positiv und negativ geladenem Trägermedium behandelten Pflanzen. Dieses Wasser stellt ein Trägermedium gemäß der Erfindung dar. Die gemäß der Erfindung behandelten Pflanzen weisen ein erheblich stärker ausgeprägtes Längenwachstum auf als die Kontrollgruppe. Eine Längenbestimmung der Wurzelausläufer ergab, dass die gemäß der Erfindung behandelten Pflanzen Wurzeln aufwiesen, die etwa 1,5 mal so lang waren wie die der Kontrollgruppe. Ebenfalls zu erkennen ist auf der Abbildung, dass die gemäß der Erfindung behandelten Pflanzen mehr Wurzelausläufer ausbildeten als die Pflanzen der Kontrollgruppe.

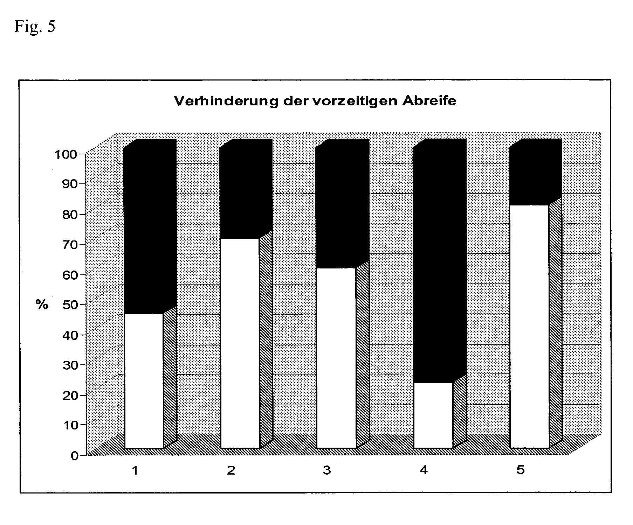

Figur 5 zeigt den Effekt der erfindungsgemäßen Behandlung auf die Notreife im Getreide. Die Säulen zeigen nacheinander: Normalversuch (1), Wasserversuch (2), Versuch mit (+) Trägermedium (3), Versuch mit (-)Trägermedium (4) und Versuch mit zunächst (+) und anschließend (-)(5). Durch die Behandlung blieben die Blätter länger grün. Nach lang anhaltender Trockenheit kommt es normaler Weise zur Notreife im Getreide. Durch die Behandlung wie (5) wurde die vorzeitige Abreife verzögert. Behandlungen mit (+) oder (-)alleine führten dazu, dass die Abreife früher auftrat als bei Pflanzen, die mit normalem Wasser behandelt wurden. Wurden Pflanzen hingegen mit dem Trägermedium behandelt, das zunächst (+) und dann (-) umfasste, trat die Abreife erheblich später auf.

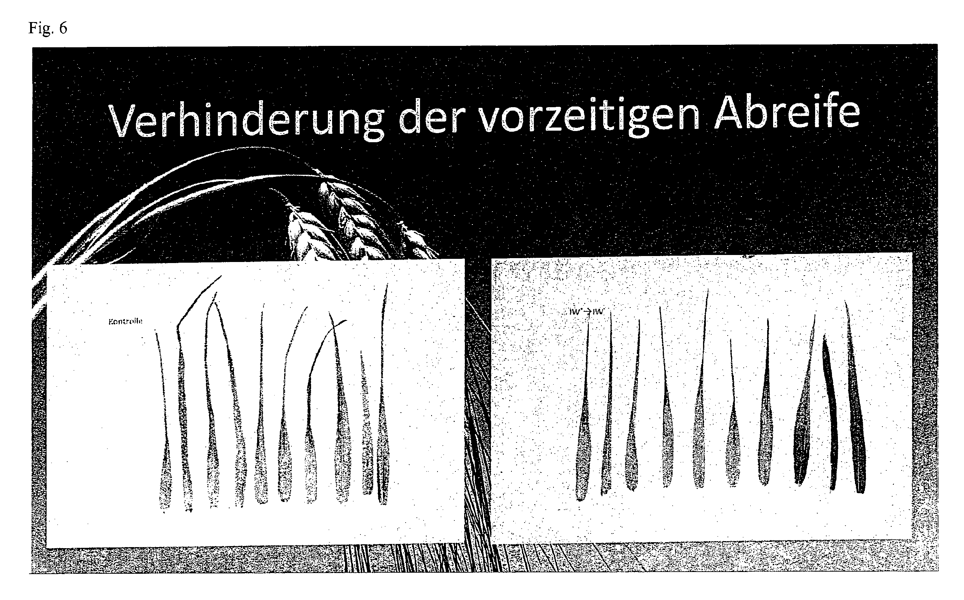

Figur 6 zeigt zwei Fotoaufnahmen von Fahnenblättern. Die linke Gruppe stellt Fahnenblätter von unbehandelten Pflanzen dar. Die rechte Gruppe stellt Fahnenblätter von Pflanzen dar, die mit (+) und dann mit (-)Trägermedium, das mittels Influenzverfahren gewonnen wurde, behandelt wurden. Deutlich erkennbar ist, dass die vorzeitige Abreife bei der gemäß der Erfindung behandelten Gruppe erheblich später auftrat. Die Abbildung zeigt jeweils 10 Fahnenblätter aus der Kontrollgruppe sowie aus der Versuchsgruppe, die alle zum gleichen Zeitpunkt entnommen wurden.

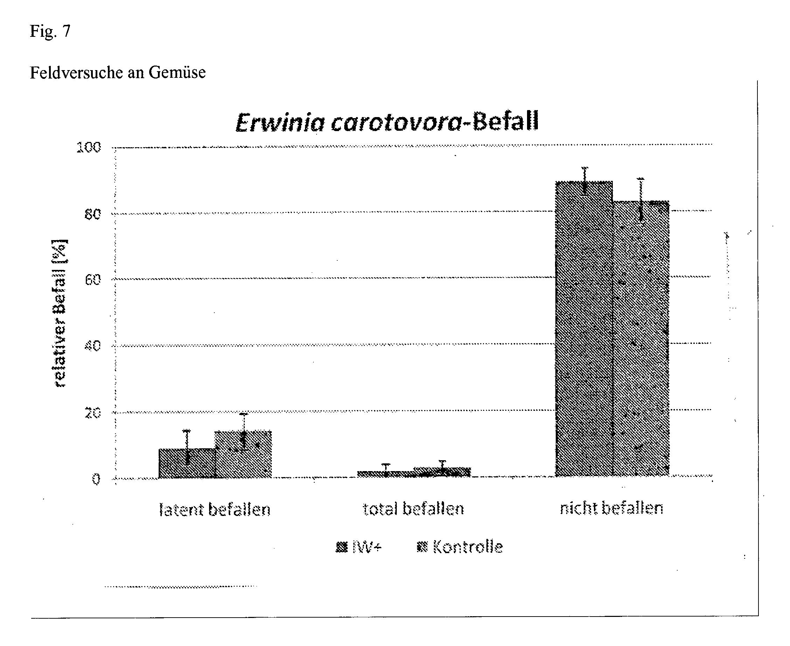

Figur 7 zeigt den Einfluss eines Trägermediums, das mittels eines Influenzverfahrens gewonnen wurde, auf Gemüse, das mit Bakterien des Stammes *Erwinia carotovora* befallen ist. Diese Bakterien verursachen beispielsweise die Schwarzbeinigkeit bei Kartoffeln. Das Gemüse in diesem Beispiel war von Hagelschäden betroffen, wodurch sich die Erkrankung schnell ausbreiten konnte. Somit eignet sich das Trägermedium auch zur Vorbeugung von Infektionskrankheiten nach mechanischen Verletzungen, beispielsweise durch Hagel.

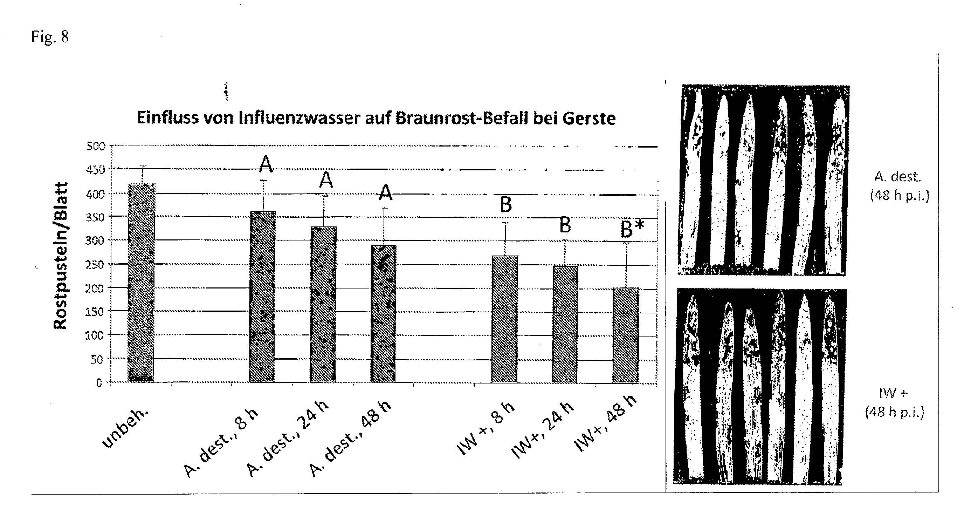

Figur 8 zeigt den Einfluss eines Trägermediums, das mittels eines Influenzverfahrens gewonnen wurde, auf Braunrostbefall bei Gerste. Diese durch *Puccinia triticina* verursachte Erkrankung bewirkt eine geringere Kornanzahl pro Ähre und ein geringeres Korngewicht. Der Braunrost der Gerste wird wegen seiner sehr kleinen, etwa 0,5 mm großen Sommersporenlager auch Zwergrost genannt. Zur Zeit des Ährenschiebens erscheinen vor allem auf der Blattoberseite, selten auf Blattscheiden, Halmen, Spelzen und Grannen relativ kleine, mehr oder weniger kreisförmige gelborange bis hellbraune Rostpusteln, die später dunkler werden. Die Sporenlager sind meist durch einen gelblichen Hof vom Blattgrün abgegrenzt. Bei starkem Befall sterben die Blätter vorzeitig ab, die Pflanzen reifen früher. Kurz vor der Reife entwickeln sich auf Blattunterseite und Blattscheide der älteren Blätter schwärzliche, sehr kleine Wintersporenlager. Die Darstellung zeigt die Verminderung des Befalls mit Rotpusteln gegenüber einer mit destilliertem Wasser behandelten bzw. nicht behandelten Vergleichsgruppe.

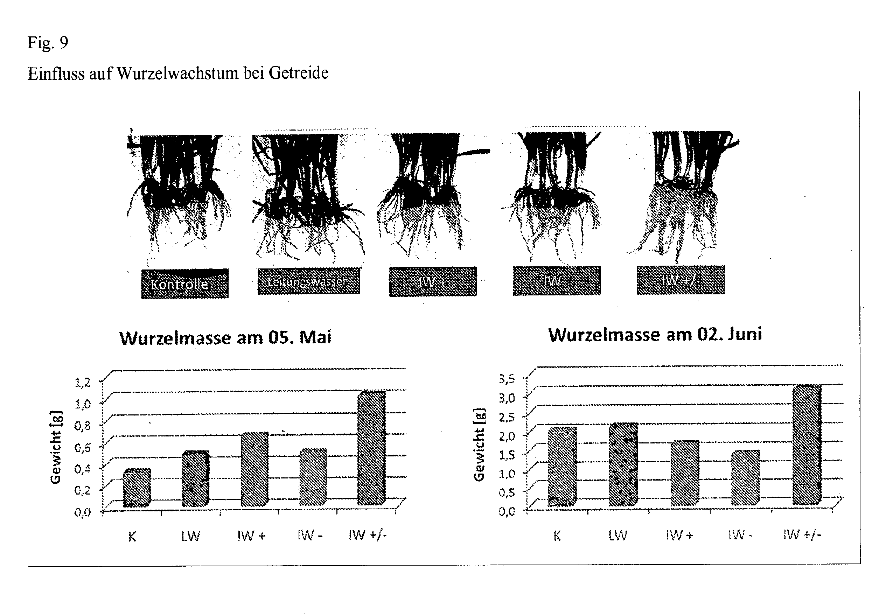

Figur 9 zeigt den Einfluss eines Trägermediums, das mittels eines Influenzverfahrens gewonnen wurde, auf das Wurzelwachstum bei Getreide. Dabei bezeichnet K die Kontrollgruppe, LW die mit Leitungswasser behandelte Gruppe, und IW+, IW- und IW+/- die mit positivem, negativem sowie gemischtem Trägermedium behandelten Pflanzen. Insbesondere die mit positivem und negativem Medium behandelten Pflanzen weisen ein deutlich stärkeres Wurzelwachstum auf.

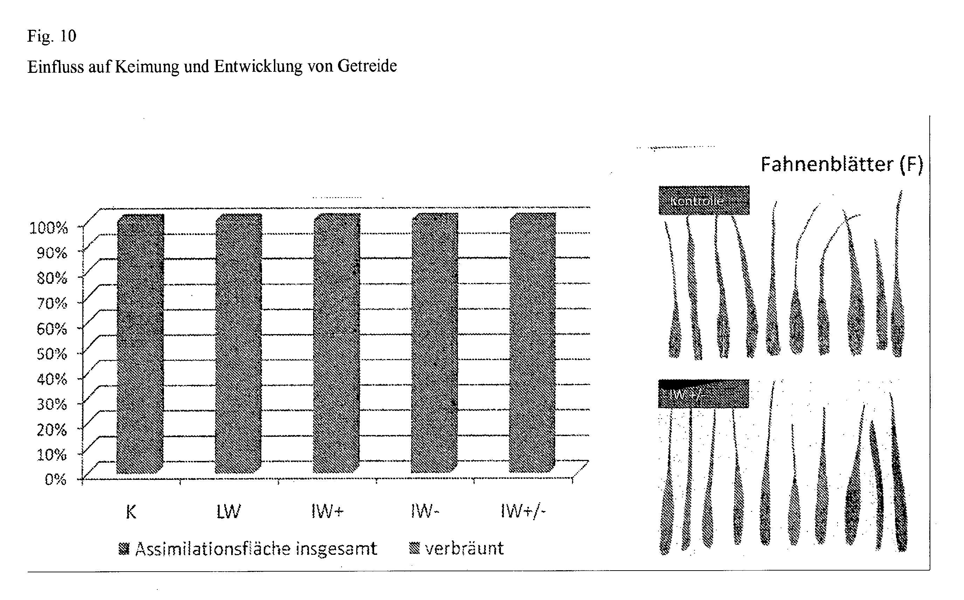

Figur 10 zeigt den Einfluss eines Trägermediums, das mittels eines Influenzverfahrens gewonnen wurde, auf Keimung und Entwicklung von Getreide. Trockenheit kann zu einer vorzeitigen Abreife des Getreides führen. Die Behandlung mit Trägermedium verzögert diese Notreife. Die obere Hälfte der Balken stellt den Anteil verbräunter Blattfläche dar, die untere Hälfte die gesamte Assimilationsfläche.

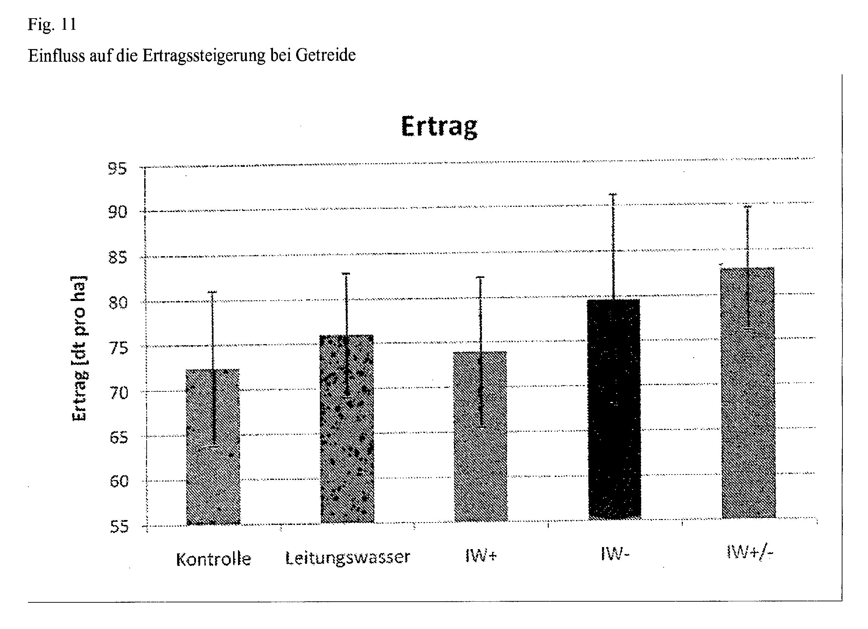

Figur 11 zeigt den Einfluss eines Trägermediums, das mittels eines Influenzverfahrens gewonnen wurde, auf den Ertrag bei Getreide. Die Behandlung mit positiv und negativ geladenem Trägermedium führt zu einer Ertragssteigerung von 14% gegenüber der unbehandelten Kontrolle. Dabei bezeichnet IW+, IW- und IW+/- die mit positivem, negativem sowie erst mit positivem und darauffolgend mit negativem Trägermedium behandelten Pflanzen.

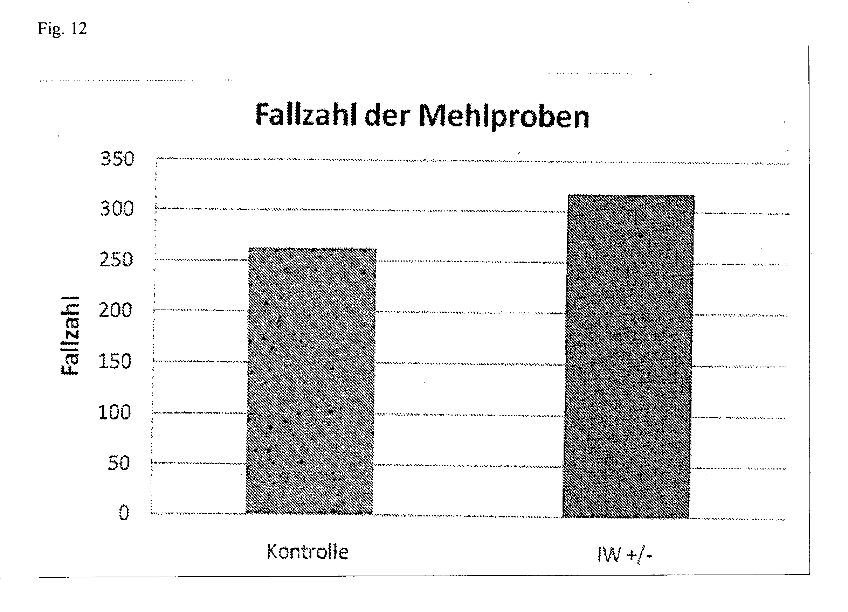

Figur 12 zeigt den Einfluss eines Trägermediums, das mittels eines Influenzverfahrens gewonnen wurde, auf die Qualität von Mehl. Die höheren Fallzahlen sind ein Maß dafür, dass der Weizen besser mit den widrigen Umweltbedingungen zurecht gekommen ist.

Das folgende Ausführungsbeispiel beschreibt die Wirkung des Verfahrens auf Keimung und Entwicklung von Mais.

Im vorliegenden Versuch führte die Behandlung mit einem Trägermedium, welches mittels eines Influenzverfahrens gewonnen wurde, dazu, dass die Entwicklung von Maispflanzen signifikant langsamer voranschritt als die Entwicklung von unbehandeltem Mais. Unbehandelter Mais zeigte zum Zeitpunkt der Ernte schon weitgehend aus den Hüllblättern herausgeschobene Kolben. Witterungsbedingt musste der Mais im vorliegenden Versuch bereits unreif geemtet werden. Das ertragliche Potential einer längeren Biomasseproduktion konnte deshalb nicht voll ausgeschöpft werden. Der behandelte Mais würde sehr wahrscheinlich auch dann noch Stärke bilden, wenn der unbehandelte Mais bereits schon abgereift wäre.

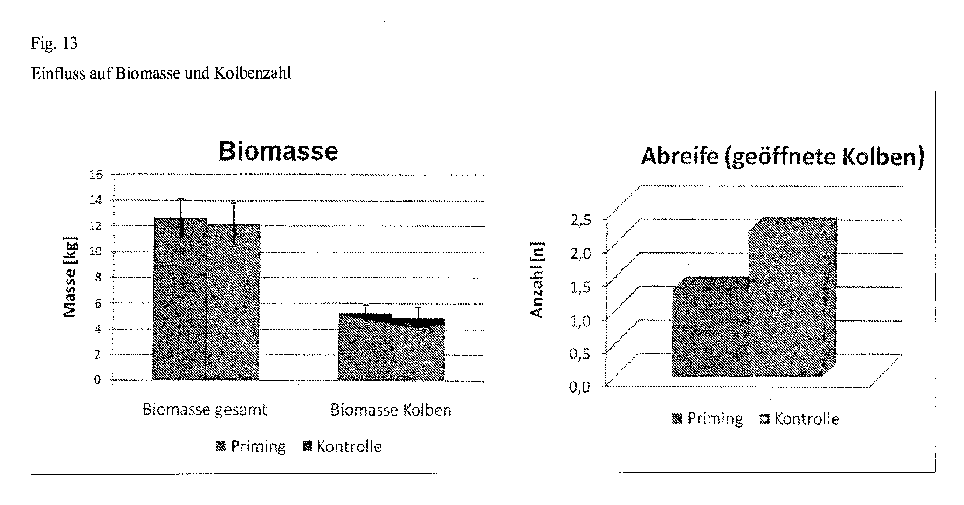

Figur 13 zeigt die Wirkung des Verfahrens auf Keimung und Entwicklung von Mais anhand der Parameter Biomasse und Kolbenanzahl. Die Behandlung mit Influenzwasser führte zu einer erhöhten Biomasse, sowohl der Kolben (7%) als auch der gesamten Pflanze (4%). Demgegenüber führte die Behandlung mit Trägermedium zu einer verzögerten Abreife der Maiskolben und damit zu einer verlängerten Einlagerung von Assimilaten.

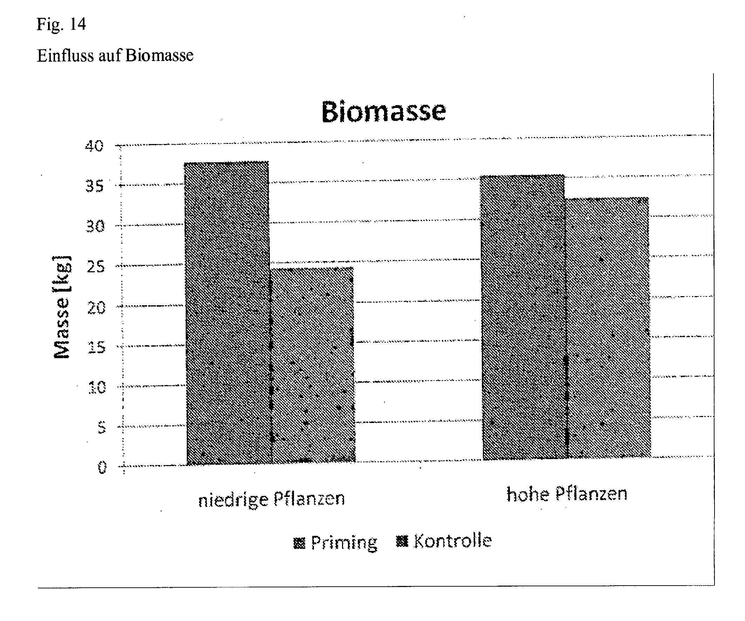

Figur 14 zeigt die Entwicklung der Biomasse bei Trockenstress. Maispflanzen, die standortbedingt einem größeren Trockenstress ausgesetzt waren, reagierten besonders stark auf das Verfahren zur Behandlung mit Trägermedium. Dies ist in der vorliegenden Figur daran zu erkennen, dass bei den Pflanzen, die aufgrund des Trockenstresses weniger wuchsen (niedrige Pflanzen) der Effekt deutlich stärker ausgeprägt war als bei Pflanzen, die einem weniger starken Trockenstress ausgesetzt waren (hohe Pflanzen).

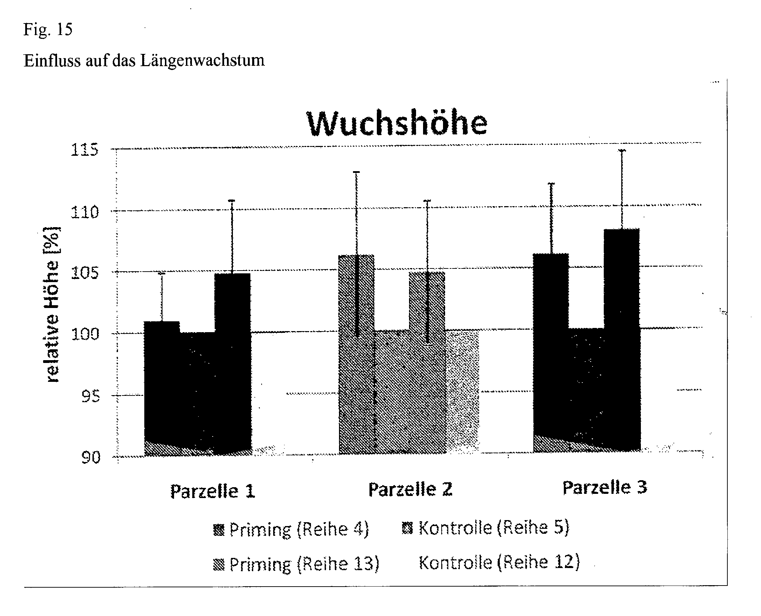

Figur 15 zeigt den Effekt der Behandlung mit Trägermedium auf die Wuchshöhe bzw. den längeren Wachstum von Mais. Die Abbildung zeigt drei Gruppierungen ä vier Säulen. Je eine Gruppierung steht für eine Parzelle. Bei jeweils einer Gruppierung stellen die beiden rechten sowie die beiden linken Säulenpaare jeweils einen Vergleich von behandelter zu unbehandelter Gruppe dar. So stellen die Säulen der ersten Gruppierung links von links nach rechts gesehen die Resultate für Kontrolle 1, Trägermedium 1, Kontrolle 2 und Trägermedium 2 dar. Deutlich erkennbar ist, dass die Behandlung mit Trägermedium einen deutlichen Effekt auf das Längenwachstum und die Wuchshöhe der Maispflanzen ausübte.

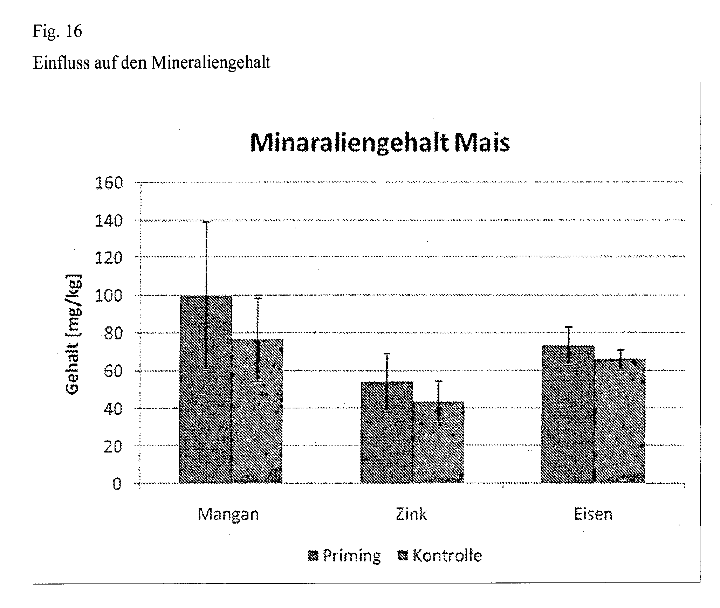

Figur 16 zeigt den Effekt der Behandlung mit Trägermedium auf den Mineraliengehalt von Mais. Der Mineraliengehalt ist ein Marker für die Fähigkeit von Maispflanzen, Nährstoffe aus dem Boden aufzunehmen. Pflanzen, die einen höheren Mineraliengehalt aufweisen, sind in der Lage, mehr Nährstoffe aus dem Boden aufzunehmen und weisen deshalb ein besseres Wachstum auf. Bei den drei vorliegenden Säulenpaaren stellt jeweils die linke Säule die mit Trägermedium behandelte Gruppe dar, während die rechte Säule die unbehandelte Gruppe darstellt. Insbesondere der Effekt der Behandlung mit Trägermedium auf den Mangangehalt war äußerst stark ausgeprägt.

Zusammenfassend konnte in vorliegendem Ausführungsbeispiel folgendes beobachtet werden: Die Behandlung mit Trägermedium, welches mittels eines Influenzverfahrens gewonnen wurde, eignet sich zur Leistungssteigerung bei Mais. Das Verfahren verbessert das Wurzelwachstum und die Wurzelleistung der Pflanzen. Darüber hinaus reduziert es Schäden, die durch Trockenheit verursacht werden können. Positive Effekte waren deutlicher in Parzellen mit höherem Trockenstress. Darüber hinaus führt die Behandlung mit Trägermedium zu einer gleichmäßigeren Pflanzenentwicklung. Die Ausbeute an Biomasse pro Hektar wurde in dem Versuch insgesamt um 4% und in den Kolben um 7% gesteigert, obwohl das Potential wegen der früheren Ernte nicht voll ausgeschöpft werden konnte. Darüber hinaus führt die Behandlung mit Trägermedium zu einer Qualitätsverbesserung in den Kolben.

Die vorliegende Erfindung stellt ein effizientes, umweltfreundliches und kostengünstiges Verfahren zur Verbesserung des Pflanzenwachstums und insbesondere zur Verbesserung des Wurzelwachstums dar.

## Patentansprüche

1. Verfahren zur Verstärkung des Wachstums bei Pflanzen, das die Beaufschlagung eines Trägermediums auf eine Pflanze und/oder einen Pflanzensamen umfasst, das Trägermedium mittels eines Influenzverfahrens erhältlich ist, welches die folgenden Schritte umfasst: Einbringen des zu behandelnden Wassers in eine elektrisch beaufschlagte Zelle, Ausrichtung der Ladungen und freien Elektronen im elektrischen Feld, Trennung der Ladungen durch Bewegung und der daraus resultierender Influenz und Sammlung und Abführung der deelektronisierten, positiv oder negativ geladenen Fraktion, **dadurch gekennzeichnet, dass** eine Mischung von positiv und negativ geladenem Trägermedium beaufschlagt wird, oder in der Abfolge zunächst positiv geladenes Trägermedium, danach negativ geladenes Trägermedium und umgekehrt.

2. Verfahren nach Anspruch 1, **dadurch gekennzeichnet, dass** das positiv geladene Trägermedium eine Gesamtkonzentration an entstandenen Oxidantien/Verunreinigungen von kleiner als 180, bevorzugt kleiner als 100, besonders bevorzugt kleiner als 50 und insbesondere bevorzugt kleiner als 30 ppm aufweist, und dass das negativ geladene Trägermedium eine Konzentration an Natriumhydroxid zwischen 5 und 500 ppm, einen pH-Wert zwischen 10 und 12 und ein Elektronenübertragungspotential von -800 +/- 300 mV aufweist.

3. Verfahren nach einem der vorhergehenden Ansprüche, **dadurch gekennzeichnet, dass** die Beaufschlagung des Trägermedium mittels Sprühen und/oder Überziehen und/oder Bestäuben und/oder Eintauchen erfolgt.

4. Verfahren nach einem der vorhergehenden Ansprüche, **dadurch gekennzeichnet, dass** der Effekt und/oder die Wirkung des Trägermediums durch Behandlung mit Röntgenstrahlung auslöschbar ist.

5. Verfahren nach einem der vorhergehenden Ansprüche, **dadurch gekennzeichnet, dass** das Verfahren eine fungizide und/oder bakterizide und/oder viruzide und/oder sporozide Wirkung aufweist.

6. Verfahren nach einem der vorhergehenden Ansprüche, **dadurch gekennzeichnet, dass** das Trägermedium ferner Nährsalze /oder Kunstdünger und/oder Insektizid und/oder Fungizid und/oder Nematizid enthält.

7. Verfahren nach einem der vorhergehenden Ansprüche, **dadurch gekennzeichnet, dass** das Verfahren eine größere Pflanzenhöhe und/oder größere Ausbeute und/oder frühere Reifung und/oder verbesserte Resistenz gegen Trockenheit bewirkt.

8. Verfahren nach einem der vorhergehenden Ansprüche, **dadurch gekennzeichnet, dass** das Verfahren eine frühere Keimung und/oder frühere Frucht und Pflanzenfärbung bewirkt.

9. Verfahren nach einem der vorhergehenden Ansprüche, **dadurch gekennzeichnet, dass** während der Behandlung Pflanzensamen behandelt werden, um die Pflanzensamenmengen, die keimen, zu erhöhen, wobei das Verfahren ferner das Setzen der mit der Behandlungsflüssigkeit behandelten Samen in natürliche und/oder künstliche Erde und das Züchten von Pflanzen aus den in die Erde gesetzten Samen umfasst.

10. Verfahren nach einem der vorhergehenden Ansprüche, **dadurch gekennzeichnet, dass** die Pflanze aus der Gruppe von Reis, Weizen, Hafer, Roggen, Einkorn, Dinkel, Hartweizen, Kannut, Gerste, Hirse, Sorghum, Teff, Hopfen, Baumwolle, Sonnenblumen, Erdnuss, Mais, Kartoffel, Süßkartoffel, Bohne, Erbse, Chicoree, Kopfsalat, Endiviensalat, Kohl, Blumenkohl, Brokkoli, Kohlrübe, Rettich, Spinat, Zwiebel, Knoblauch, Aubergine, Paprika, Sellerie, Karotte, Turbankürbis, Kürbis, Zucchini, Gurke, Apfel, Birne, Melone, Erdbeere, Weintraube, Himbeere, Ananas, Banane, Kaffee, Sojabohne, Tabak, Tomate, Sorghum, Zuckerrohr, Rose, Saintpaulia, Petunie, Pelargonie, Poinsettia, Chrysantheme, Gartennelke, Kakao und Zinnie ausgewählt ist.

11. Mittel zur Verstärkung des Wachstums von Pflanzen oder Samen, erhältlich nach einem Verfahren gemäß einer der vorhergehenden Patentansprüche.

## Claims

1. A method for enhancing the growth of plants which comprises the application of a carrier medium to a plant and / or plant seed, wherein the carrier medium is obtainable by means of an electrical influence process, comprising the following steps: placing the water to be treated in an electrically-powered cell, alignment of the charges and free electrons in the electric field, separating the charges by motion and the resulting electrical influence and collecting and remitting of de-electronised, positively or negatively charged fraction, **characterized in that** a mixture of positive and negative charged carrier medium is applied, or in sequence initially positively charged carrier medium, then negatively charged carrier medium, and vice versa.

2. Method according to claim 1, **characterized in that** the positively charged carrier medium has a total concentration of originated oxidants / impurities of less than 180, preferably less than 100, more preferably less than 50 and most preferably less than 30 ppm, and that the negative charged carrier medium has a sodium hydroxide concentration of between 5 and 500 ppm, a pH of between 10 and 12 and an electron transfer potential of -800 +/- 300 mV.

3. Method according to one of the preceding claims, **characterized in that** the application of the carrier medium is achieved by means of spraying and / or coating and / or dusting and / or dipping.

4. Method according to one of the preceding claims, **characterized in that** the effect and / or the action of the carrier medium is erasable by treatment with X-ray radiation.

5. Method according to one of the preceding claims, **characterized in that** the carrier medium comprises a disinfecting effect with respect to fungi and / or bacteria and / or viruses and / or spores.

6. Method according to one of the preceding claims, **characterized in that** the carrier medium comprises further nutrient salts and / or fertilizers and / or insecticide and/ or fungicide and / or nematicide.

7. Method according to one of the preceding claims, **characterized in that** the method causes a larger plant height and / or larger yield and / or earlier maturation and / or improved resistance to drought.

8. Method according to one of the preceding claims, **characterized in that** the method causes an earlier germination and / or earlier fruit and plant coloration.

9. Method according to one of the preceding claims, **characterized in that** during the treatment plant seeds are treated to increase the plant seed quantities which germinate, said method further comprising setting the seeds treated with the treatment liquid in natural and / or artificial soil and culturing plants from the seed set in the soil.

10. Method according to one of the preceding claims, **characterized in that** the plant is selected from the group consisting of rice, wheat, oats, rye, einkorn, spelled, durum wheat, Karmut, barley, millet, sorghum, teff, hops, cotton, sunflower, peanut, corn, potato, sweet potato, bean, pea, chicory, lettuce, endive, cabbage, cauliflower, broccoli, turnip, radish, spinach, onion, garlic, eggplant, peppers, celery, carrot, Turban squash, pumpkin, zucchini, cucumber, apple, pear, melon, strawberry, grape, raspberry, pineapple, banana, coffee, soybean, tobacco, tomato, sorghum, sugarcane, rose, Saintpaulia, petunia, pelargonium, poinsettia, chrysanthemum, carnation, cocoa and zinnia.

11. Means for enhancing the growth of plants or seeds, obtainable by a process according to one of the preceding claims.

## Revendications

1. Procédé pour améliorer la croissance des plantes qui comprend l'application à un support de transfert à une plante et / ou des semences de plantes, le support de transfert étant obtenable par moyen d'un procédé d'influence électrique comprenant les étapes consistant à: placer l'eau à traiter dans une cellule électriquement alimentée, l'alignement des charges et des électrons libres dans le champ électrique, la séparation des charges par le mouvement et l'influence électrique résultante et la collecte et la remise de la fraction de-électronisée chargée positivement ou négativement, **caractérisé en ce qu'**un mélange de milieu de support chargé positivement et négativement est appliqué, ou en séquence initialement un milieu de support chargé positivement, puis un support de transfert chargé négativement, et inversement.

2. Procédé selon la revendication 1, **caractérisé en ce que** le support de transfert chargé positivement a une concentration totale d'oxydants / impuretés créé inférieure à 180, de préférence inférieure à 100, plus préférablement inférieure à 50 et de manière préférée inférieure à 30 ppm, et que le milieu de support chargé négativement a une concentration en hydroxyde de sodium comprise entre 5 et 500 ppm, un pH compris entre 10 et 12 et un potentiel de transfert d'électrons de -800 +/- 300 mV.

3. Procédé selon l'une des revendications précédentes, **caractérisé en ce que** l'application du support de transfert est réalisée au moyen de pulvérisation et / ou enduction et / ou la formation de poussière et / ou immersion.

4. Procédé selon l'une des revendications précédentes, **caractérisé en ce que** l'effet et / ou l'action du milieu de support est effaçable par traitement avec un rayonnement de rayons X.

5. Procédé selon l'une des revendications précédentes, **caractérisé en ce que** le procédé comprend un effet fongicide et / ou bactéricide et / ou virucide et / ou sporicide.

6. Procédé selon l'une des revendications précédentes, **caractérisé en ce que** le support de transfert comprend des sels nutritifs et / ou engrais et / ou insecticide et / ou fongicide et / ou nématicide.

7. Procédé selon l'une des revendications précédentes, **caractérisé en ce que** le procédé entraîne une plus grande hauteur de la plante et / ou plus grand rendement et / ou une maturation plus précoce et / ou une résistance améliorée à la sécheresse.

8. Procédé selon l'une des revendications précédentes, **caractérisé en ce que** le procédé provoque une germination plus tôt et / ou des fruits plus tôt et une coloration des plantes.

9. Procédé selon l'une des revendications précédentes, **caractérisé en ce que** pendant le traitement des graines de plantes sont traitées pour augmenter les quantités de graines qui germent, ledit procédé comprenant en outre le repiquage des graines traités avec le liquide de traitement dans le sol naturel et / ou artificiel et la culture des plantes obtenues des graines dans le sol.

10. Procédé selon l'une des revendications précédentes, **caractérisé en ce que** la plante est choisie dans le groupe constitué par le riz, le blé, l'avoine, le seigle, le petit épeautre, d'épeautre, de blé dur, Karmut, l'orge, le millet, le sorgho, le teff, le houblon, le coton, le tournesol, l'arachide, le maïs , pomme de terre, la patate douce, le haricot, le pois, la chicorée, laitue, endive, chou, chou-fleur, brocoli, navet, radis, les épinards, l'oignon, l'ail, l'aubergine, les poivrons, le céleri, la carotte, Turban courges, citrouilles, courgettes, concombre, pomme, poire , melon, fraise, raisin, framboise, ananas, banane, café, soja, tabac, la tomate, le sorgho, la canne à sucre, rose, Saintpaulia, pétunia, pélargonium, poinsettia, chrysanthème, oeillet, le cacao et le zinnia est sélectionné.

11. Moyens pour améliorer la croissance des plantes ou des graines, pouvant être obtenus par un procédé selon l'une quelconque des revendications précédentes.
